# EUROPÄISCHE PATENTANMELDUNG

(11) **EP 0 961 185 A2**
(43) Veröffentlichungstag der Anmeldung: **01.12.1999**
(21) Anmeldenummer: 99110420.9
(22) Anmeldetag: 28.05.1999
(51) Int. Cl.: G05B 19/406

(54) **Verfahren und System zur Einrichtung von CNC-Maschinen**

(30) Priorität: 29.05.1998 DE 19824219
(71) Anmelder: Max Mayer Maschinenbau GmbH Burlafingen, D-7910 Neu-Ulm (DE)
(72) Erfinder: Hiller, Hermann, 89284 Pfaffenhofen/Diepertshofen (DE)
(74) Vertreter: Koch, Günther, Dipl.-Ing.

(57) **Zusammenfassung**

Bei dem erfindungsgemäßen Verfahren und System zur Einrichtung von CNC-Maschinen wird der Maschinentisch mit Spannelementen und Werkstückrohling kinematographisch, beispielsweise durch eine Videokamera, aufgenommen und dem kinematographischen Bildablauf, der auf einem Monitor ersichtlich ist, wird eine Graphik des fertigen Werkstücks maßstabsgetreu und lagerichtig überlagert. Dieses letztgenannte Graphikbild bleibt nach seiner Einrichtung und Justierung auf dem Monitor stehen, und gegenüber diesem Graphikbild können unter Beobachtung des kinematographischen Bildes Spannelemente und Werkstückrohling manuell oder ferngesteuert derart eingerichtet werden, daß Kollisionen mit dem Werkzeug oder dem Aggregat vermieden werden und der gesamte, für das Werkstück erforderliche Bereich vom Werkstückrohling abgedeckt wird. Das überlagerte bzw. eingeblendete Graphikbild kann dem CNC-Programm der Werkzeugmaschine oder auch einer anderen Quelle, beispielsweise einem CAD-Zeichenprogramm, entnommen werden.

## Beschreibung

Die Erfindung betrifft ein Verfahren und ein System zur Einrichtung von CNC-Maschinen durch Positionieren der Spannelemente und des Werkstückrohlings auf dem Maschinentisch.

Insbesondere bei CNC-Maschinen ist im Sinne einer wirtschaftlichen Ausnutzung, vor allem bei zunehmend kleiner werdenden Serien, eine schnelle und maßgerechte Einrichtung des Werkstückrohlings auf dem Maschinentisch derart notwendig, daß der gesamte für das Werkstück erforderliche Bereich vom Rohling abgedeckt wird, wobei andererseits nicht mehr Verschnitt als unbedingt nötig entstehen soll. Die als Vakuumteller oder Spannpratzen ausgebildeten Spannelemente müssen derart am Werkstückrohling angreifen, daß eine Kollision mit dem Werkzeug oder dem Werkzeugaggregat mit Sicherheit ausgeschlossen wird, und das Werkstück trotzdem sicher hält.

Bei einem gattungsgemäßen Verfahren werden die Umrißlinien des Werkstücks durch ein Laser-Projektionssystem auf den Maschinentisch projiziert, und die Spannelemente und der Werkstückrohling werden auf die projizierten Umrißlinien eingerichtet. Dabei wird der Laserstrahl entsprechend dem Programm der CNC-Maschine gesteuert und derart schnell abgelenkt, daß ein kontinuierliches Umrißbild sichtbar ist.

Dieses bekannte Verfahren ermöglicht zwar eine präzise Positionierung des Werkstückrohlings, jedoch ergeben sich Probleme beim Darstellen von Innenbearbeitungen des Werkstückrohlings, wobei durchgehende und nicht durchgehende Bearbeitungen nicht unterschiedlich dargestellt werden. Die Kenntnis der Lage dieser Bearbeitungen ist jedoch wichtig für die Auswahl der Spannmittel. Ferner ist der Laserprojektor wegen der mechanischen Komponenten wartungs- und verschleißintensiv. Nachteilig jedoch sind vor allem die hohen Kosten eines derarten Laserprojektionssystems.

Der Erfindung liegt daher die Aufgabe zugrunde, ein gattungsgemäßes Verfahren und ein gattungsgemäßes System mit zugeordneter Vorrichtung zu schaffen, wodurch auf wirtschaftliche Weise ein schnelles Einrichten von CNC-Maschinen gewährleistet wird und sowohl die Spannelemente als auch der Werkstückrohling kollisionssicher positioniert werden können.

Gelöst wird die gestellte Aufgabe verfahrensmäßig durch die im Kennzeichnungsteil des Patentanspruchs 1 angegebenen Schritte und bei einem erfindungsgemäßen System durch die im Kennzeichnungsteil des Anspruchs 10 angegebenen Merkmale.

Je nach Größe und Formgebung des Werkstücks kann eine Kamera oder es können mehrere kinematographischen Aufnahmekameras Anwendung finden, die dreidimensionale Bilder erzeugen oder Aufnahmen unter verschiedenen Sichtwinkeln herstellen.

Die Daten für die Graphik können dem die Werkzeugmaschine steuernden CNC-Programm entnommen werden; sie können jedoch auch aus anderen Quellen stammen, beispielsweise aus einem CAD-Zeichenprogramm.

Zu diesem Zweck können die Videosignale oder digitale Bild-Signale der Kamera und die Signale der CNC-Programme über einen Computer einer Synchronmischstufe zugeführt werden, deren Ausgang einem Monitor zugeführt wird, der ein Live-Bild des Maschinentisches und des zu fertigenden Werkstücks darstellt. Dieser Monitor steht im Sichtbereich der Bedienungsperson. Stattdessen kann das von der Videokamera aufgenommene Bild auch auf dem Bildschirm der CNC-Steuerung dargestellt werden. Unter Beobachtung des Bildschirmes können dann die hinsichtlich Größe, Form und Funktion zweckmäßigsten Spannmittel manuell zusammen mit dem Werkstückrohling eingerichtet werden.

Stattdessen ist auch eine ferngesteuerte Positionierung mit visueller Bildschirmkontrolle möglich.

Eine vollständige Automatisierung ergibt sich, wenn gemäß einer Weiterbildung der Erfindung eine software-gesteuerte Positionierung über die Bildverarbeitung erfolgt.

Die Daten für die richtige Lage der Graphik relativ zum Maschinentisch (und der programmgesteuerten Bewegung der Werkzeuge) entweder direkt aus der CNC-Steuerung (z.B. Nullpunktspeicher) entnommen oder manuell eingegeben werden.

Die eingeblendete Graphik kann auf dem Bild des Maschinentisches verschoben und gedreht werden, bis eine optimale Lage erreicht ist. Die veränderte Situation von der CNC-Steuerung ausgewertet werden, so daß das Werkstück tatsächlich an der gewünschten Stelle bearbeitet wird.

Die Erfindung kann kostengünstig in Verbindung mit den üblichen vorhandenen Spannsystemen optimal eingesetzt werden und bringt hier eine wesentliche Zeitersparnis beim Rüsten und Belegen der Maschine. Der nachträgliche Einbau des erfindungsgemäßen Systems in vorhandene CNC-Maschinen bereitet keinen großen technischen Aufwand und kann daher kostengünstig durchgeführt werden. Wegen der Möglichkeit der Bildüberwachung kann auf Wegmeßsysteme der Spannelemente verzichtet werden, und es sind auch Anschläge für den Werkstoffrohling überflüssig, wenn das Werkstück rundum bearbeitet wird.

Die Erfindung ist nicht nur zur Positionierung flächiger Werkstücke unter eindimensionaler Betrachtung geeignet, sondern auch für dreidimensionale Gegenstände. Zu diesem Zweck kann neben der 2-dimensionalen Bildverarbeitung auch eine 3-dimensionale Verarbeitung vorgenommen werden, wobei der Maschinentisch von mehreren Kameras in verschiedenen Koordinaten aufgenommen wird, um räumliche Teile und Spannvorrichtungen zu plazieren.

Die Erfindung ist in erster Linie bestimmt für programmgesteuerte Holzbearbeitungsmaschinen; sie ist darüberhinaus jedoch auch anwendbar für alle Maschinen oder Bearbeitungszenter mit datengesteuerten Programmabläufen für die Bearbeitung anderer Werkstoffe, z.B. Kunststoff, Aluminium, Stahl, Glas, Marmor.

Nachstehend wird ein Ausführungsbeispiel des erfindungsgemäßen Systems anhand der Zeichnung beschrieben. Die einzige Abbildung der Zeichnung zeigt eine schematische Darstellung dieses erfindungsgemäßen Positioniersystems.

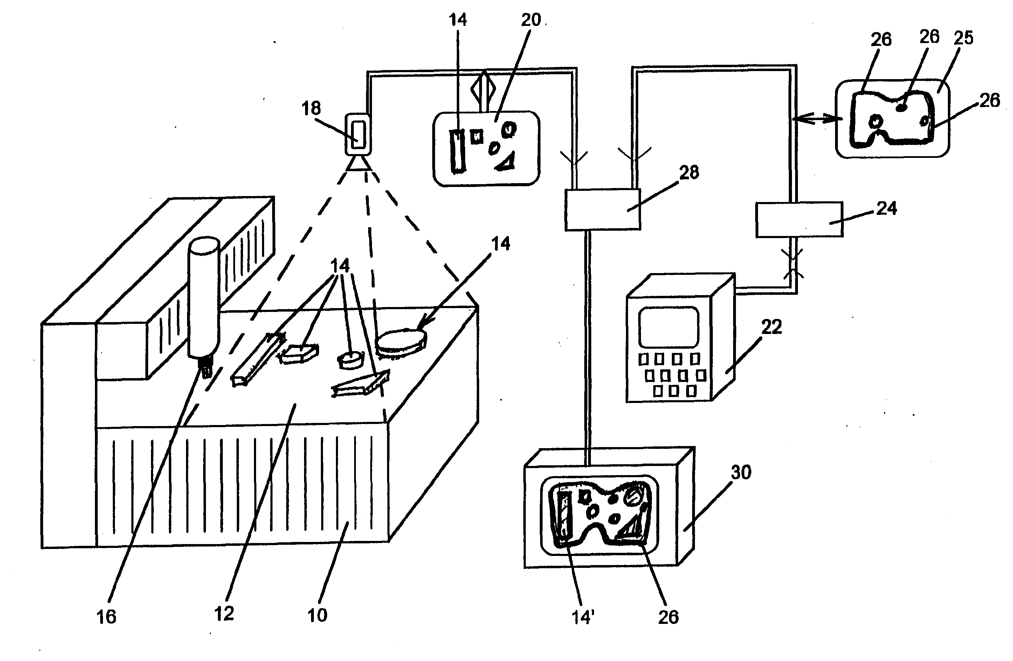

In der Zeichnung ist schematisch eine CNC-Holzbearbeitungsmaschine 10 dargestellt, auf deren Maschinentisch 12 unterschiedlich geformte Spannelemente 14, beispielsweise Vakuumteller oder Spannpratzen, aufgelegt sind. Ein in der Zeichnung nicht dargestellter, von den Spannelementen 14 auf dem Maschinentisch 12 fixierter Werkstückrohling wird durch ein Fräswerkzeug 16 oder ein anderes Werkzeug programmgesteuert bearbeitet. Über dem Maschinentisch 12 ist eine Videokamera 18 montiert, die den Maschinentisch mit den darauf ruhenden Spannelementen kinematographisch aufnimmt. Die Wiedergabe der kinematographischen Bilder kann auf einem Monitor 20 erfolgen. Dieser Monitor 20 zeigt Abbildungen 14' der Spannelemente 14 und läßt die Veränderung der Lage dieser Spannelemente erkennen.

Eine CNC-Steuervorrichtung 22 liefert der CNC-Maschine 10 Steuersignale zur Bearbeitung des Werkstückrohlings. Das CNC-Programm der Steuervorrichtung 22 liefert über einen Computer 24, der auch im CNC-Steuergerät integriert sein kann, eine entzerrte und angepaßte Graphik 26 des Werkstücks.

Die von der Videokamera 18 bzw. der CNC-Steuervorrichtung gelieferten Videosignale werden in einer Synchron-Mischstufe 28 überlagert, und die überlagerten Bilder werden auf einem Monitor 30 dargestellt, und zwar zeigt dieser Monitor kinematographisch die Lage und Lageveränderung der Abbildung 14' der Spannelemente. Die Graphikabbildung 26 wird als stehendes Bild wiedergegeben, und zwar in einer Lageanordnung, die der Lage des fertigen Werkstücks auf dem Maschinentisch relativ zu den Spannelementen 14 wiedergibt. Der Monitor 30 steht im Sichtbereich der Bedienungeperson. Eine Darstellung kann auch auf dem Display der CNC-Steuerung vorgenommen werden.

Die Bilddarstellungen 20 und 25 sollen die Videosignale kennzeichnen, die von der CNC-Steuervorrichtung 22 bzw. der Videokamera 18 geliefert werden. Eine Einzeldarstellung auf einem Monitor kann erfolgen, ist jedoch für die Erfindung nicht zwingend.

Unter Beobachtung des Monitors 30 kann die Bedienungsperson manuell die Spannelemente auf dem Maschinentisch so positionieren, daß sie innerhalb der Umrißlinien der Graphik 26 zu liegen kommen. Zu deutlichen Unterscheidung zwischen Graphikumrissen, die Werkstückausnehmungen darstellen und den Spanntellern können letztere zweckmäßigerweise farbig, insbesondere farbig reflektierend, ausgebildet sein.

Unter Verwendung des Monitors 30 kann auch eine ferngesteuerte Positionierung vorgenommen werden. Eine vollautomatische Positionierung kann über eine Softwaresteuerung über Bildverarbeitung erfolgen. Der Bildschirm des Monitors erlaubt dann eine Kontrolle der so eingestellten Spannelemente.

Die Daten für die richtige Lage der Graphik relativ zum Maschinentisch können entweder direkt aus der CNC-Steuerung (z.B. Nullpunktspeicher) entnommen oder manuell eingegeben werden. Die eingeblendete Graphik kann auf dem Bild des Maschinentisches verschoben und gedreht werden, bis eine optimale Lage erreicht ist. Diese veränderte Situation kann von der CNC-Steuerung ausgewertet werden, so daß der Werkstückrohling tatsächlich an der gewünschten Stelle bearbeitet wird.

Durchgehende oder nicht-durchgehende Bearbeitungen können z.B. durch unterschiedliche Farben dargestellt werden. Dies ermöglicht es der Bedienungsperson, die jeweils günstigsten Spannmittel einzusetzen.

Vorstehend wurde die Erfindung in Verbindung mit einer CNC-Steuerung beschrieben, die der Mischstufe Bildsignale der Graphik des Werkstücks liefert. Dieses Graphikbild kann jedoch auch auf andere Weise erzeugt und abgetastet werden. Beispielsweise könnte über eine weitere Videokamera ein fertiges Werkstück abgetastet und mit den Videosignalen der Kamera 18 vermischt werden. Allerdings ist für diese Abtastung keine kinematographische Aufnahme erforderlich, sondern ein Standbild, das auf dem Bildschirm entsprechend verdreht oder verschoben werden kann, so daß auch photographische Aufnahmen projiziert und/oder abgetastet werden können.

### Bezugszeichenliste

- 10: CNC- Holzbearbeitungsmaschine
- 12: Maschinentisch
- 14: Spannelemente
- 14': Abbildungen
- 16: Fräswerkzeug
- 18: Videokamera (analog oder digital)
- 20: Bilddarstellung
- 22: CNC-Steuervorrichtung
- 24: Computer
- 25: Bilddarstellung
- 26: Grafik
- 28: Mischstufe
- 30: Monitor

## Patentansprüche

1. Verfahren zum Einrichten von CNC-Maschinen (10) durch Positionieren der Spannelemente (14) und des Werkstückrohlings auf dem Maschinentisch (12),
gekennzeichnet durch die folgenden Schritte:
- es werden mittels wenigstens einer Videokamera (18) Videosignale oder digitale Bildsignale vom Maschinentisch (12) und den Spannelementen (14) geliefert;
- es werden Bildsignale einer Graphik (26) des Werkstücks erzeugt, die sowohl Umriß als auch Innenbearbeitung darstellt;
- die Videosignale und die Bildsignale werden überlagert (28) und auf einem Monitor (30) gleichzeitig dargestellt;
- die Spannelemente (14) werden innerhalb der Umrißgraphik auf dem Maschinentisch (12) ausgerichtet;
- der Werkstückrohling wird unter Beobachtung der Graphik auf dem Maschinentisch ausgerichtet.

2. Verfahren nach Anspruch 1,
dadurch gekennzeichnet, daß die Graphik der CNC-Steuerung (22) der Maschine (10) entnommen wird.

3. Verfahren nach Anspruch 1,
dadurch gekennzeichnet, daß die Daten für die richtige Lage der Graphik (26) relativ zum Maschinentisch manuell eingegeben werden.

4. Verfahren nach Anspruch 1,
dadurch gekennzeichnet, daß die eingeblendete Graphik (26) auf dem Bild des Maschinentisches verschoben und gedreht wird, bis eine optimale Lage erreicht ist, wobei diese Veränderung durch die CNC-Steuerung ausgewertet wird.

5. Verfahren nach einem der Ansprüche 1 bis 4,
dadurch gekennzeichnet, daß das Videobild der Videokamera (18) und die graphischen Darstellungen unter Berücksichtigung der CNC-Programmtechnik durch eine Software koordiniert werden.

6. Verfähren nach einem der Ansprüche 1 bis 5,
dadurch gekennzeichnet, daß einem willkürlich positionierten Werkstück über einen PC-Befehl die vorgesehene Fräskontur zugeordnet wird, indem eine Drehung oder Verschiebung oder Skalierung mit automatischer Änderung des CNC-Bearbeitungsprogramms erfolgt.

7. Verfahren nach einem der Ansprüche 1 bis 6,
dadurch gekennzeichnet, daß die Positionierung der Spannelemente ferngesteuert mit visueller Bildschirmkontrolle durchgeführt wird.

8. Verfahren nach einem der Ansprüche 1 bis 6,
dadurch gekennzeichnet, daß die Positionierung der Spannelemente softwaregesteuert über Bildverarbeitung durchgeführt wird.

9. Verfahren nach Anspruch 1,
dadurch gekennzeichnet, daß durchgehende oder nicht-durchgehende Bearbeitungen durch unterschiedliche Farben dargestellt werden.

10. System zum Einrichten von CNC-Maschinen (10) durch Positionieren der Spannelemente (14) und des Werkstückrohlings auf dem Maschinentisch (12),
gekennzeichnet durch die folgenden Merkmale:
- eine oder mehrere Videokameras oder digitale Kameras (18) sind über dem Maschinentisch (12) montiert;
- die CNC-Steuerung oder ein beigestellter Rechner (Computer) (22) der Maschine (10) liefert eine entzerrte und angepaßte Graphik des fertigen Werkstücks;
- einer Mischstufe (28) werden die Bildsignale der Videokamera (18) und der CNC-Steuerung zugeführt und die überlagerten Signale werden auf einem Monitor (30) dargestellt, der eine maßstabgerechte und lagerichtige Darstellung des Maschinentisches und des zu fertigenden Werkstücks liefert.
